# EUROPÄISCHE PATENTSCHRIFT

(11) **EP 2 254 775 B1**
(45) Veröffentlichungstag und Bekanntmachung des Hinweises auf die Patenterteilung: **12.10.2016**
(21) Anmeldenummer: 09717774.5
(22) Anmeldetag: 03.03.2009
(51) Int. Cl.: B60R 25/00, B60R 25/04, G07C 9/00

(54) **ELEKTRISCHE SCHALTUNG FÜR EINE ZUGANGSKONTROLLE UND FÜR EINE WEGFAHRSPERRE EINES FAHRZEUGS**
ELECTRIC CIRCUIT FOR AN ACCESS CONTROL AND IMMOBILIZER OF A VEHICLE
CIRCUIT ÉLECTRIQUE POUR CONTRÔLE D'ACCÈS ET POUR DISPOSITIF ANTI-DÉMARRAGE D'UN VÉHICULE

(30) Priorität: 06.03.2008 DE 102008012882
(43) Veröffentlichungstag der Anmeldung: 01.12.2010
(73) Patentinhaber: Continental Automotive GmbH, 30165 Hannover (DE); Continental Automotive France, 31100 Toulouse (FR)
(72) Erfinder: EMMERLING, Ulrich, 93309 Kelheim (DE); FÖRSTL, Bernhard, 93346 Ihrlerstein (DE); HOSTMANN, Daniel, 93059 Regensburg (DE); HUSCHENBETT, Matthias, 93059 Regensburg (DE); JANSSEUNE, Luc, F-31810 Venerque (FR); SCHUSTER,Rupert, 85296 Rohrbach (DE); WAGNER, Roland, 34128 Kassel (DE)
(86) Internationale Anmeldenummer: PCT/EP2009/052508
(87) Internationale Veröffentlichungsnummer: WO 2009/109578

(56) Entgegenhaltungen:
- EP-A- 0 671 528
- WO-A-98/34818
- WO-A-2006/035972
- DE-A1- 4 340 260
- DE-A1- 10 063 971
- DE-A1- 10 304 463
- DE-A1-102005 059 226
- DE-A1-102008 004 240
- US-A1- 2006 022 795

## Beschreibung

Die Erfindung betrifft eine elektrische Schaltung für eine Zugangskontrolle und für eine Wegfahrsperre eines Fahrzeugs. Eine elektrische Schaltung gemäß dem Oberbegriff von Anspruch 1 ist aus der DE 43 40 260 A1 bekannt.

Drahtlose Zugangssysteme werden in der Fahrzeugtechnik benutzt, um ein Fahrzeug zu entriegeln bzw. das Öffnen einer Fahrzeugtür zu ermöglichen. Bei passiven drahtlosen Zugangssystemen trägt eine Person einen ID-(Identitäts-)Geber bei sich. Dieser ID-Geber kommuniziert mit einer im Fahrzeug befindlichen Basisstation, sobald eine bestimmte Entfernung zum Fahrzeug bzw. zur Basisstation unterschritten ist. Bei passiven Systemen sendet die Basisstation üblicherweise ein Signal im Langwellenbereich, der auch als Low Frequency (LF) bezeichnet wird, aus. Die Sendefrequenz liegt bspw. bei 125 kHz oder 135 kHz. Der ID-Geber, der im Folgenden auch als Transponder bezeichnet wird, antwortet der Basisstation mit einem Signal im Dezimeterwellenbereich bzw. Ultra High Frequency (UHF). Die Frequenz liegt z. B. in Europa bei 432 MHz bzw. 868 MHz. Der Transponder sendet mit der hohen Frequenz, da das Senden mit einer niedrigen Frequenz über die relativ große Entfernung viel Energie benötigt, die die Batterie des ID-Gebers auf Dauer nicht bereitstellen kann.

Die US 7,317,376 B2 zeigt ein kombiniertes System eines Zugangssystems mit einer Wegfahrsperre. Eine Wegfahrsperre sorgt dafür, dass das Auto nur gestartet werden kann, wenn sich der Fahrer im Fahrzeug befindet. Bei der in der US 7,317,376 B2 vorgestellten Wegfahrsperre sendet die Basisstation ein niederfrequentes Signal aus, auf das der Transponder ebenfalls mit einem niederfrequenten Signal reagiert. Bei den kurzen Entfernungen zwischen Transponder und Basisstation kann der Sender auch mit wenig Energie das niederfrequente Signal aussenden. Bei dieser Vorrichtung werden die niederfrequenten Signale für die Wegfahrsperre und das Zugangssystem mit der gleichen Antenne angesteuert, was allerdings nachteilhaft ist, weil die Anforderungen an die Signalstärke und die Güte des Schwingkreises bei beiden Systemen unterschiedlich sind und die Sendeleistungen schlecht gemeinsam optimiert werden können. Werden für die beiden Systeme unterschiedliche Antennen benutzt, stellt sich aber das Problem, dass sich der Aufwand für die Systeme erhöht.

Es ist Aufgabe der vorliegenden Erfindung, eine elektrische Schaltung für eine Zugangskontrolle und eine Wegfahrsperre eines Fahrzeugs bereitzustellen, bei dem die Sendeleistungen der Antennen besser eingestellt werden können, wobei der Aufwand trotzdem gering gehalten werden soll.

Diese Aufgabe wird durch den Gegenstand der unabhängigen Patentansprüche gelöst. Weitere vorteilhafte Ausgestaltungen ergeben sich aus den Unteransprüchen.

Es wird eine elektrische Schaltung für eine Zugangskontrolle und für eine Wegfahrsperre eines Fahrzeugs bereitgestellt. Die Zugangskontrolle steuert das Öffnen und Verriegeln des Fahrzeugs, während die Wegfahrsperre dafür sorgt, dass das Fahrzeug nicht gestartet werden kann, solange die Sperre aktiviert ist. Die elektrische Schaltung enthält einen ersten Antennentreiber zum Treiben einer ersten Antenne zum Senden eines Signals im Fall des Identifizierens eines ID-Gebers für die Zugangskontrolle des Fahrzeugs.

Ein zweiter Antennentreiber ist vorgesehen zum Treiben einer zweiten Antenne zum Aussenden eines Signals im Falle des I-dentifizierens eines ID-Gebers für die Wegfahrsperre eines Fahrzeugs. Ferner enthält die elektrische Schaltung eine Empfängereinrichtung zum Empfang eines von einer Antenne empfangenen Signals zur Identifizierung eines ID-Gebers für die Wegfahrsperre. Die Antenne kann eine reine Empfangsantenne sein, in einer alternativen Ausführungsform handelt es sich um die zweite Antenne.

Der erste Antennentreiber und die Empfängereinrichtung sind gemeinsam in einem Halbleiterchip integriert. Die elektrische Schaltung hat den Vorteil, dass durch die gemeinsame Integration Kosten gespart werden, weil weniger Bauteile verwendet werden und die Kommunikation zwischen den Elementen, beispielsweise zwischen erstem Antennentreiber und der Empfängereinrichtung, vereinfacht wird.

Dies ist besonders der Fall, wenn die Empfängereinrichtung, die eigentlich zum Empfang des niederfrequenten Signals für die Wegfahrsperre eingerichtet ist, auch zur Diagnose des ersten Antennentreibers genutzt wird. Erfindungsgemäß wird deshalb eine Diagnoseschaltung vorgesehen zum Messen des von der ersten Antenne ausgesendeten Signals. Damit kann bspw. die Arbeitsfrequenz der ersten Treiberschaltung gemessen werden, um zu erkennen, ob sich diese aufgrund von Umweltbedingungen verstimmt hat. Besonders Bauteile, die sich außerhalb des Halbleiterchips befinden, wie die Antennen oder Kondensatoren, variieren stark mit der Temperatur. Dadurch kann sich die Signalstärke des ausgesendeten Signals verändert, was durch Einstellen des Antennentreibers ausgeglichen wird.

Unterschiedliche Fahrzeugkarosserien und Antennenpositionen verstimmen häufig die Arbeitsfrequenz des Treibers. Dies verringert die Reichweite des von der Antenne erzeugten Magnetfelds und führt eventuell zu einer Fehlfunktion des Systems. Falls zusätzlich eine Kalibrierschaltung zum Einstellen des ersten Antennentreibers vorgesehen ist, kann aufgrund der Messung in der Diagnoseschaltung der erste Antennentreiber eingestellt werden, indem bspw. seine Frequenz oder seine Ausgangsleistung verändert wird.

In einer weiteren Ausführungsform wird ein dritter Antennentreiber vorgesehen zum Treiben einer dritten Antenne im Fall des Identifizierens eines ID-Gebers für das Zugangssystem eines Fahrzeugs. Bei Zugangssystemen ist es vorteilhaft, mehrere Antennen gleichzeitig zu benutzen, da sich ein Benutzer von unterschiedlichen Richtungen dem Fahrzeug nähern kann. Es können auch mehr als zwei Antennen verwendet werden, in einem Ausführungsbeispiel sind es sechs Antennen und sechs Antennentreiber. Die Eigenschaften des ersten Antennentreibers und die Eigenschaften des zweiten Antennentreibers können bei gleichzeitigem Betrieb unabhängig voneinander eingestellt werden, da ihre jeweiligen Signalstärken oder Frequenzen unterschiedlich verstellt sein können.

In einer Ausführungsform ist auf dem Halbleiterchip weiterhin eine Steuerschaltung eines Hochsetzstellers untergebracht. Unter Hochsetzsteller wird eine Schaltung verstanden, die aus einer niedrigen Spannung einer höhere Spannung erzeugt. Der Hochsetzsteller wird benötigt, um eine hohe Spannung zu erzeugen, mit der das Ausgangssignal für die Antennen betrieben wird. Es empfiehlt sich, diese Steuerschaltung auch in dem Halbleiterchip zu integrieren, um die Kosten für das System weiter zu verringern und die Kommunikation zwischen den Antennentreibern, der Empfängereinrichtung sowie der Steuerschaltung für den Hochsetzsteller zu verringern.

Vorzugsweise ist auch der zweite Antennentreiber zusammen mit dem ersten Antennentreiber und der Empfängereinrichtung in dem Halbleiterchip integriert, um zusätzliche Kosten zu sparen.

In einer Ausführungsform ist ein Synchronisationsausgang in dem Halbleiterchip vorgesehen, der zur Ausgabe eines Referenztaktes zum Synchronisieren des ersten Antennentreibers mit mindestens einem weiteren Halbleiterchip dient. Der Synchronisationsausgang ermöglicht, dass Antennentreiber mehrerer Chips gleichzeitig eine einzelne Antenne treiben. Dies verringert die Leistungsaufnahme jeden einzelnen Chips und erhöht somit seine Lebensdauer.

Die Erfindung betrifft auch die Verwendung der elektrischen Schaltung in einem Fahrzeug. Durch die Integration der Funktionen der Wegfahrsperre und des Zugangssystems bei Verwendung unterschiedlicher Antennetreiber wird die Kommunikation zwischen beiden Systemen verbessert und die Wahrscheinlichkeit, dass sie sich gegenseitig stören, sinkt.

Offenbart ist zudem auch ein Verfahren zum Messen eines Antennentreibers einer erfindungsgemäße elektrische Schaltung. Dabei wird der ersten Antennentreiber so betrieben, dass die erste Antenne ein niederfrequentes Signals aussendet. Anschließend wird das niederfrequente Signals mittels der zweiten Antenne und der Empfängereinrichtung empfangen und schließlich das empfangenen Signal diagnostiziert. Dabei wird die Empfängereinrichtung als Empfängereinrichtung für ein niederfrequentes Signal genutzt, um den ersten Antennentreiber zu diagnostizieren. Das von der ersten Antenne ausgesandte Signal wird im Betrieb von einem ID-Geber empfangen und ausgewertet.

Beim Diagnostizieren wird vorzugsweise die Frequenz, das Signal-Rausch-Verhältnis oder die Signalstärke des niederfrequenten Signals gemessen. Damit kann überprüft werden, ob das niederfrequente Signal so sendet, dass es vom ID-Geber in der spezifizierten Entfernung vom Fahrzeug erkannt werden kann.

Dem Schritt des Diagnostizierens schließt sich ein Schritt des Einstellens des ersten Antennentreibers entsprechen eines Sollwerts an, damit zukünftig die erste Antenne Signale mit gewünschten Eigenschaften aussendet. Der Sollwert kann in einer Lockup-Tabelle in dem Halbleiterchip abgespeichert sein.

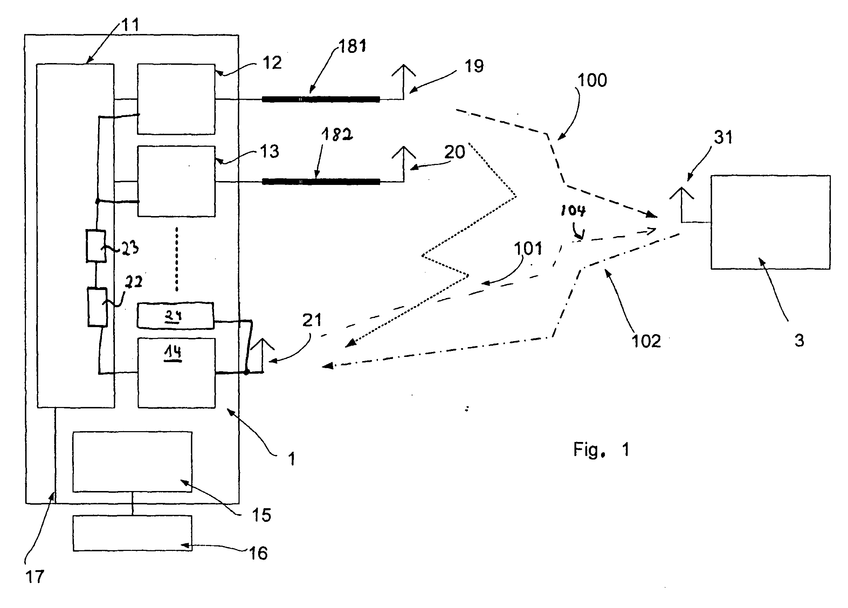

Die Erfindung wird in einem Ausführungsbeispiel anhand der Figur erläutert. Dabei zeigt Figur 1 eine Vorrichtung eines Zugangssystems sowie einer Wegfahrsperre eines Fahrzeugs.

Die Vorrichtung enthält einen Halbleiterchip 1, einen ID-Geber 3, externe Komponenten eines Hochsetzstellers 16, die externen Zuleitungen 181 und 182, eine erste Antenne 19, eine zweite Antenne 21 und eine dritte Antenne 20. Abgesehen von dem ID-Geber 3 gehören alle Elemente zu der Basisstation im Fahrzeug.

Der Halbleiterchip 1 enthält eine Steuereinrichtung und Datenverarbeitung 11, einen ersten Antennentreiber 12, einen zweiten Antennentreiber 24, einen dritten Antennentreiber 13, eine Empfängereinrichtung 14, einen Schaltungsteil für einen Spannungswandler 15 sowie einen Synchronisationsausgang 17.

Der erste Antennentreiber 12 ist über die externe Zuleitung 181 mit der Antenne verbunden, während der dritte Antennentreiber 13 über die externe Zuleitung 182 mit der dritten Antenne 20 verbunden ist. Die Empfängereinrichtung 14 ist mit einem Eingang mit der zweiten Antenne 21 verbunden.

Die erste Antenne 19 wird als Sendeantenne für die Zugangskontrolle des Fahrzeugs benutzt. Im Falle, dass das Fahrzeug abgestellt und verriegelt ist, treibt die erste Treiberschaltung 12 in regelmäßigen Abständen die erste Antenne 19, die daraufhin ein niederfrequentes Signal mit einer Frequenz von 125 kHz aussendet. Falls der ID-Geber 3 sich in der Nähe des Fahrzeugs befindet, empfängt er dieses niederfrequente Signal 100 mittels seiner Antenne 31.

Falls das ausgesendete Signal von dem Fahrzeug mit der richtigen Kennung abgesandt wurde, sendet der ID-Geber 3 ein hochfrequentes Signal zurück an die Basisstation. Die Antenne am ID-Geber 3 und die Empfangsschaltung in der Basisstation für dieses hochfrequente Signal sind in der Figur 1 nicht gezeigt. Die zugehörige Empfangsantenne für dieses hochfrequente Signal ist mit einem weiteren Halbleiterchip des Steuergeräts für die Zugangskontrolle und die Wegfahrsperre verbunden. Dieser weitere Halbleiterchip verarbeitet das hochfrequente Signal. Falls diese Verarbeitungseinheit berechnet, dass das empfangene Signal von dem richtigen ID-Geber 3 ausgesandt wurde, entriegelt sie das Fahrzeug.

Sobald das Fahrzeug entriegelt ist, kommt es auf die Wegfahrsperre an, ob das Fahrzeug gestartet werden kann. Um die Wegfahrsperre zu entriegeln, findet die Kommunikation zwischen dem Halbleiterchip 1 über die Antennen 21 und 31 mit dem ID-Geber 3 statt. In einem Anwendungsbeispiel befindet sich die zweite Antenne 21 in einer Vertiefung der Mittelkonsole des Fahrzeugs. Um das Fahrzeug starten zu können, muss der Fahrer den ID-Geber 3 in diese Vertiefung legen. Aufgrund des kurzen Abstands zwischen der zweiten Antenne 21 und dem ID-Geber 3 bedarf es nur wenig Energie, um die niederfrequenten Signale zwischen den beiden Komponenten drahtlos auszutauschen. Der geringe Abstand hilft auch, die möglichen Störungen der Kommunikation zu begrenzen. Die Anforderungen an die Funktionsfähigkeit der Wegfahrsperre sind sehr hoch und eine störungsfreie Kommunikation muss unter möglichst allen Umständen gewährleistet sein.

Um abzufragen, ob die Wegfahrsperre deaktiviert werden soll, treibt der zweite Antennentreiber 24 die zweite Antenne 21 so an, dass sie ein niederfrequentes Signal 104 mit einer Frequenz im Bereich von typischerweise 125 kHz aussendet. Es können aber auch Frequenzen von beispielsweise 20 kHz oder 135 kHz verwendet werden. Der ID-Geber 3 empfängt dieses Signal 104 an seiner Antenne 31, decodiert es und sendet seinerseits ein niederfrequentes Signal 102 über die Antenne 31 zurück. Das niederfrequente Signal 102 wird mit der zweiten Antenne 21 empfangen und in der Empfängereinrichtung 14 demoduliert und decodiert. Wird festgestellt, dass das Signal die Anforderungen erfüllt, wird die Wegfahrsperre aufgehoben und der Fahrer kann das Fahrzeug starten, indem er beispielsweise einen Knopf drückt.

Im Halbleiterchip 1 werden auch die Antennen diagnostiziert. Der erste Antennentreiber 12 steuert seinen Ausgang so an, dass die erste Antenne 19 ein Signal 101 bestimmter Feldstärken aussendet. Dieses Signal wird von der Empfangsantenne 21 empfangen und von der Empfängereinrichtung 14 ausgewertet. Die Empfängereinrichtung 14 ist an mindestens einem Ausgang mit mindestens einem Eingang der Diagnoseschaltung 22 verbunden, die ihrerseits mindestens einen Ausgang aufweist, der von der Kalibrierschaltung 23 empfangen wird.

Falls in der Diagnoseschaltung 22 festgestellt wird, dass das Signal bestimmte Anforderungen, bspw. an Frequenz, Stärke oder Signal-Rausch-Verhältnis nicht erfüllt, wird von der Diagnoseschaltung 22 ein entsprechendes Signal an die Kalibrierschaltung 23 ausgegeben, damit der erste Antennentreiber 12 richtig eingestellt wird. Dies kann zum Beispiel dadurch erfolgen, dass die Ausgangsleistung oder die Frequenz des ersten Antennentreibers 12 verändert wird.

Weil der erste Antennentreiber 12, der zum Treiben der Antenne für die Zugangskontrolle zuständig ist, auf dem gleichen Halbleiterchip 1 wie die Empfängereinrichtung 14 für die Wegfahrsperre untergebracht ist, ist es möglich, die Empfängereinrichtung 14 zu benutzen, um den ersten Antennentreiber 12 zu kalibrieren.

Eine Verstellung der Signalstärke des Signals verringert die Reichweite des von der Antenne erzeugten Magnetfelds und führt eventuell zu einer Fehlfunktion des Systems. Die Verstimmung kann durch wechselnde Umweltbedingungen wie beispielsweise Temperaturschwankungen hervorgerufen werden. Durch die hier gezeigte Autokalibration kann die Kalibrierung der Ausgangsleistung des ersten Antennentreibers 12 sogar nach Einbau des Halbleiterchips 1 in das Fahrzeug vorgenommen werden. Dadurch, dass der erste Antennentreiber 12 mit der Empfängereinrichtung 14 in dem Halbleiterchip 1 integriert ist, kann die Kalibrierung innerhalb des Halbleiterchips 1 vorgenommen werden und eine aufwendige Kommunikation, bspw. über einen externen CAN-Bus, wird unnötig.

Zudem führt das gemeinsame Vorsehen des ersten Antennentreibers 12, des zweiten Antennentreiber 13 und der Empfängereinrichtung 14 auf einem einzelnen Halbleiterchip 1 zu einem geringeren Platzbedarf für das gesamte Steuergerät, wodurch auch Kosten reduziert werden.

Auf gleiche Weise kann der dritte Antennentreiber 13 kalibriert werden. Es ist nun möglich, das Niederfrequenzsystem sehr genau zu kalibrieren, was vorher nicht oder nur sehr schwer möglich war. Somit kann die Leistung automatisch eingestellt werden und die Leistungswerte können unabhängig vom Fahrzeugtyp und über die gesamte Lebensdauer des Fahrzeugs sichergestellt werden. Es ist möglich, höhere Güten als bisher zuzulassen, um bei gleicher Treiberleistung höhere Lesereichweiten zu erzielen.

Die externen Komponenten 16 enthalten unter anderem die Leistungstransistoren des Hochsetzstellers. Solche Leistungstransistoren benötigen üblicherweise speziell angepasste Herstellungstechnologien und werden darum vorzugsweise extern bereitgestellt.

Die Stärke des ausgesendeten Signals 100 hängt von den Betriebsbedingungen des Fahrzeugs, bspw. von der Temperatur, ab. Aus diesem Grunde ist es sinnvoll, auch während des Betriebes des Fahrzeugs im Feld den ersten Antennentreiber 12 zu kalibrieren. Dies kann in bestimmten zeitlichen Abständen erfolgen, die einprogrammiert werden. Falls die Diagnose ergibt, dass die erste Antennenschaltung 12 nicht mehr kalibriert werden kann, wird dem Fahrer ein Warnhinweis gegeben, damit er das Fahrzeug reparieren lässt.

In einer in Figur nicht gezeigten Ausführungsform befindet sich zwischen den Antennentreibern 12, 13 und 24 und den entsprechenden Antennen 19, 20, 21 ein Umschalter, mit dem die Verbindungen zwischen den Antennentreibern und den Antennen ausgetauscht werden können. So kann mittels des Umschalters die erste Antenne 19 mit dem dritten Antennentreiber 13 und die dritte Antenne 20 mit dem ersten Antennentreiber 12 verbunden werden. In einer Ausführungsform verbindet der Umschalter die erste Antenne 19 mit der Empfängereinrichtung 14 und die zweite Antenne 21 mit dem ersten Antennentreiber 12.

Der Synchronisationsausgang 17 wird zur Synchronisation mit Antennentreibern von einem weiteren Halbleiterchip oder von mehreren weiteren Halbleiterchips benötigt. Die erste Antenne 19 wird in einer Ausführungsform von einem weiteren Antennentreiber eines anderen Halbleiterchips getrieben, wobei der Ausgang dieses weiteren Antennentreibers mit dem ersten Antennentreiber 12 parallel geschaltet ist.

Damit der erste Antennentreiber 12 und dieser weitere Antennentreiber zur gleichen Zeit schalten, ist eine Synchronisation notwendig, beispielsweise mittels eines gemeinsamen Taktgebers.

In dem weiteren Chip braucht kein weiterer Hochsetzsteller 15 vorgesehen zu werden, denn die von den Schaltungen 15 und 16 bereitgestellte erhöhte Spannung bis zu 40 V kann von beiden Halbleiterchips verwendet werden. Auch ein Oszillator zur Erzeugung einer Referenzfrequenz braucht nur in einem der Halbleiterchips vorgesehen zu werden.

Die Signale zum Austauschen der für die Synchronisation benötigten Information werden über den Synchronisationsausgang 17 bereitgestellt. Falls der Halbleiterchip 1 als ASIC (Application Specific Integrated Circuit) realisiert wird, ist er aufgrund des Synchronisationsausgangs 17 als kaskadierbarer ASIC aufgebaut. Die Treiber von mehreren dieser ASIC werden miteinander über einen Referenztakt synchronisiert, aber auch der Spannungsheber (DC-DC-Konverter) und die Kommunikation zu einem Mikrocontroller können von mehreren Halbleiterchips gemeinsam genutzt werden.

### Bezugszeichenliste

- 1: Halbleiterchip
- 3: ID-Geber
- 11: Steuereinrichtung und Datenverarbeitung
- 12: erster Antennentreiber
- 13: dritter Antennentreiber
- 14: Empfängereinrichtung
- 15: Logik für Spannungswandler
- 16: externe Komponenten für Spannungswandler
- 17: Synchronisationsausgang
- 19: erste Antenne
- 20: dritte Antenne
- 21: zweite Antenne
- 22: Diagnoseschaltung
- 23: Kalibrierschaltung
- 24: zweiter Antennentreiber
- 31: Antenne
- 100, 101, 102, 104: Niederfrequenzsignale
- 181, 182: externe Zuleitung

## Patentansprüche

1. Elektrische Schaltung für eine Zugangskontrolle und für eine Wegfahrsperre eines Fahrzeugs, enthaltend:
- einen ersten Antennentreiber (12) zum Treiben einer ersten Antenne (19) zum Senden eines Signals (100) im Fall des Identifizierens eines ID-Gebers (3) für die Zugangskontrolle des Fahrzeugs,
- einen zweiten Antennentreiber (24) zum Treiben einer zweiten Antenne (21) zum Aussenden eines Signals (104) im Fall des Identifizierens eines ID-Gebers (3) für die Wegfahrsperre des Fahrzeugs,
- eine Empfängereinrichtung (14) zum Empfang eines von einer Antenne (21) empfangenen Signals (102) zur Identifizierung eines ID-Gebers (3) für die Wegfahrsperre,
**dadurch gekennzeichnet, dass** der erste Antennentreiber (12) und die Empfängereinrichtung (14) gemeinsam in einem Halbleiterchip (1) integriert sind, und dass in dem Halbleiterchip (1) weiterhin eine Diagnoseschaltung (22) zum Messen des von der ersten Antenne (19) gesendeten Signals (101) vorgesehen ist, wobei mindestens ein Eingang der Diagnoseschaltung (22) mit einem Ausgang der Empfängereinrichtung (14) verbunden ist.

2. Elektrische Schaltung nach Anspruch 1,
**dadurch gekennzeichnet, dass**
eine Kalibrierschaltung (23) vorgesehen ist zum Einstellen des ersten Antennentreibers (12), wobei die Kalibrierschaltung mindestens einen Eingang aufweist, der mit einem Ausgang der Diagnoseschaltung (22) verbunden ist.

3. Elektrische Schaltung nach Anspruch 2,
**dadurch gekennzeichnet, dass**
ein dritter Antennentreiber (13) zum Treiben einer dritten Antenne (20) im Fall des Identifizierens eines ID-Gebers (3) für das Zugangssystem eines Fahrzeugs vorgesehen ist,
wobei die Eigenschaften des ersten Antennentreibers (12) und des dritten Antennentreibers (13) bei gleichzeitigem Betrieb unabhängig voneinander eingestellt werden können.

4. Elektrische Schaltung nach einem der Ansprüche 1 bis 3, **dadurch gekennzeichnet, dass**
in dem Halbleiterchip (1) weiterhin eine Steuerschaltung (14) eines Hochsetzstellers untergebracht ist.

5. Elektrische Schaltung nach einem der Ansprüche 1 bis 4, **dadurch gekennzeichnet, dass**
der zweite Antennentreiber (24) zusammen mit dem ersten Antennentreiber (12) und der Empfängereinrichtung (14) integriert in dem Halbleiterchip ist.

6. Elektrische Schaltung nach einem der Ansprüche 1 bis 5, **dadurch gekennzeichnet, dass**
einen Synchronisationsausgang (17) zur Ausgabe eines Referenztakts zum Synchronisieren mit mindestens einem weiteren Halbleiterchip.

7. Elektrische Schaltung nach einem der Ansprüche 1 bis 6, **dadurch gekennzeichnet, dass**
einen Umschalter, mit dem die Verbindung zwischen Antennentreibern (12, 13, 21) und Antennen (19, 20, 21) oder zwischen der Empfängereinrichtung (14) und Antennen (19, 20, 21) umgeschaltet werden können.

8. Elektrische Schaltung nach Anspruch 2, **dadurch gekennzeichnet, dass** das Einstellen des ersten Antennentreibers (12) entsprechend einem Sollwert erfolgt.

9. Elektrische Schaltung nach einem der Ansprüche 1 bis 8, **dadurch gekennzeichnet, dass** die Diagnoseschaltung (22) dafür ausgelegt ist, das von der ersten Antenne (19) gesendete Signal (101) bezüglich der Frequenz, des Signal-Rausch-Verhältnisses oder der Signalstärke zu diagnostizieren.

10. Elektrische Schaltung nach Anspruche 8, **dadurch gekennzeichnet, dass** die Kalibrierschaltung (23) dafür ausgelegt ist, bei dem Einstellendes ersten Antennentreibers (12) den von dem ersten Antennentreiber ausgegebenen Strom einzustellen.

11. Verwendung einer elektrischen Schaltung nach einem der Ansprüche 1 bis 10 in einem Fahrzeug.

## Claims

1. Electrical circuit for an access control and for an engine immobilizer of a vehicle containing:
- a first antenna driver (12) for driving a first antenna (19) for sending a signal (100) in the event of identification of an ID transmitter (3) for the access control of the vehicle,
- a second antenna driver (24) for driving a second antenna (21) for emitting a signal (104) in the event of identification of an ID transmitter (3) for the engine immobilizer of the vehicle,
- a receiver device (14) for receiving a signal (102), received by an antenna (21), for identifying an ID transmitter (3) for the engine immobilizer,
**characterized in that**
the first antenna driver (12) and the receiver device (14) are jointly integrated in a semiconductor chip (1), and **in that**
the semiconductor chip (1) additionally contains a diagnosis circuit (22) for measuring the signal (101) sent by the first antenna (19),
wherein at least one input of the diagnosis circuit (22) is connected to an output of the receiver device (14).

2. Electrical circuit according to Claim 1,
**characterized in that**
a calibration circuit (23) is provided for the purpose of adjusting the first antenna driver (12), wherein the calibration circuit has at least one input that is connected to an output of the diagnosis circuit (22).

3. Electrical circuit according to Claim 2,
**characterized in that**
a third antenna driver (13) for driving a third antenna (20) in the event of identification of an ID transmitter (3) for the access system of a vehicle is provided,
wherein the properties of the first antenna driver (12) and of the third antenna driver (13) can be adjusted independently of one another during simultaneous operation.

4. Electrical circuit according to one of Claims 1 to 3, **characterized in that**
the semiconductor chip (1) additionally accommodates a control circuit (14) of a step-up converter.

5. Electrical circuit according to one of Claims 1 to 4, **characterized in that**
the second antenna driver (24) is integrated in the semiconductor chip together with the first antenna driver (12) and the receiver device (14).

6. Electrical circuit according to one of Claims 1 to 5, **characterized by**
a synchronization output (17) for outputting a reference clock for synchronization with at least one further semiconductor chip.

7. Electrical circuit according to one of Claims 1 to 6, **characterized by**
a changeover switch that can be used to change over the connection between antenna drivers (12, 13, 21) and antennas (19, 20, 21) or between the receiver device (14) and antennas (19, 20, 21).

8. Electrical circuit according to Claim 2, **characterized in that** the first antenna driver (12) is adjusted in accordance with a setpoint value.

9. Electrical circuit according to one of Claims 1 to 8, **characterized in that** the diagnosis circuit (22) is designed to diagnose the signal (101) sent by the first antenna (19) in respect of frequency, signal-to-noise ratio or signal strength.

10. Electrical circuit according to Claim 8, **characterized in that** the calibration circuit (23) is designed to accompany the adjustment of the first antenna driver (12) by adjusting the current that is output by the first antenna driver.

11. Use of an electrical circuit according to one of Claims 1 to 10 in a vehicle.

## Revendications

1. Circuit électrique pour un contrôle d'accès et pour un dispositif antidémarrage d'un véhicule, comportant :
- un premier circuit d'attaque d'antenne (12) destiné à attaquer une première antenne (19) pour l'émission d'un signal (100) dans le cas de l'identification d'un transmetteur d'ID (3) pour le contrôle d'accès du véhicule,
- un deuxième circuit d'attaque d'antenne (24) destiné à attaquer une deuxième antenne (21) pour l'émission d'un signal (104) dans le cas de l'identification d'un transmetteur d'ID (3) pour l'antidémarrage du véhicule,
- un dispositif récepteur (14) destiné à recevoir un signal (102) reçu par l'antenne (21) pour l'identification d'un transmetteur d'ID (3) pour l'antidémarrage,
**caractérisé en ce que** le premier circuit d'attaque (12) et le dispositif récepteur (14) sont tous deux intégrés dans une puce à semi-conducteur (1), et **en ce qu'**il est en outre prévu dans la puce à semi-conducteur (1) un circuit de diagnostic (22) destiné à mesurer le signal (101) émis par la première antenne (19), dans lequel au moins une entrée du circuit de diagnostic (22) est connectée à une sortie du dispositif récepteur (14).

2. Circuit électrique selon la revendication 1, **caractérisé en ce qu'**il est prévu un circuit d'étalonnage (23) pour régler le premier circuit d'attaque (12), dans lequel le circuit d'étalonnage comporte au moins une entrée qui est connectée à une sortie du circuit de diagnostic (22).

3. Circuit électrique selon la revendication 2, **caractérisé en ce qu'**il est prévu un troisième circuit d'attaque d'antenne (13) destiné à attaquer une troisième antenne (20) dans le cas de l'identification d'un transmetteur d'ID (3) pour le système d'accès d'un véhicule,
dans lequel les propriétés du premier circuit d'attaque d'antenne (12) et du troisième circuit d'attaque d'antenne (13) peuvent être réglées indépendamment les unes des autres lors d'un fonctionnement simultané.

4. Circuit électrique selon l'une quelconque des revendications 1 à 3,
**caractérisé en ce qu'**un circuit de commande (14) d'un convertisseur élévateur est en outre logé dans la puce à semi-conducteur (1).

5. Circuit électrique selon l'une quelconque des revendications 1 à 4,
**caractérisé en ce que** le deuxième circuit d'attaque d'antenne (24) est intégré dans la puce à semi-conducteur en association avec le premier circuit d'attaque d'antenne (12) et le dispositif récepteur (14).

6. Circuit électrique selon l'une quelconque des revendications 1 à 5,
**caractérisé en ce qu'**il est prévu une sortie de synchronisation (17) destinée à délivrer une horloge de référence pour la synchronisation avec au moins une autre puce à semi-conducteur.

7. Circuit électrique selon l'une quelconque des revendications 1 à 6,
**caractérisé par** un convertisseur au moyen duquel les connexions entre les circuits d'attaque d'antenne (12, 13, 21) et les antennes (19, 20, 21) ou entre le dispositif récepteur (14) et les antennes (19, 20, 21) peuvent être commutées.

8. Circuit électrique selon la revendication 2, **caractérisé en ce que** le réglage du premier circuit d'attaque d'antenne (12) s'effectue de manière à ce qu'il corresponde à une valeur nominale.

9. Circuit électrique selon l'une quelconque des revendications 1 à 8, **caractérisé en ce que** le circuit de diagnostic (22) est conçu pour diagnostiquer le signal (101) émis par la première antenne (19) en ce qui concerne la fréquence, le rapport signal à bruit ou l'intensité du signal.

10. Circuit électrique selon la revendication 8, **caractérisé en ce que** le circuit d'étalonnage (23) est conçu pour régler le courant délivré par le premier circuit d'attaque d'antenne lors du réglage du premier circuit d'attaque d'antenne (12).

11. Utilisation d'un circuit électrique selon l'une quelconque des revendications 1 à 10 dans un véhicule.
